# EUROPÄISCHE PATENTANMELDUNG

(11) **EP 2 745 911 A1**
(43) Veröffentlichungstag der Anmeldung: **25.06.2014**
(21) Anmeldenummer: 13196287.0
(22) Anmeldetag: 09.12.2013
(51) Int. Cl.: B01D 46/24, B01D 46/42

(54) **Filterelement**

(30) Priorität: 20.12.2012 DE 102012223927
(71) Anmelder: MAHLE International GmbH, 70376 Stuttgart (DE)
(72) Erfinder: GAUGLER, Thomas, 74613 Öhringen (DE)
(74) Vertreter: BRP Renaud & Partner

(57) **Zusammenfassung**

Die vorliegende Erfindung betrifft ein Filterelement (1) mit einem Filtermaterial (2), welches stirnseitig über zwei Endscheiben (3,4) abgedichtet ist. Erfindungswesentlich ist dabei, dass zwischen dem Filtermaterial (2), insbesondere einem Faltenstern, und zumindest einer Endscheibe (3,4) Stahlwollefäden (5) angeordnet sind, über welche das Filtermaterial (2) elektrisch leitend mit der zumindest einen Endscheibe (3,4) verbunden ist. Die Stahlwollefäden (5) sind dabei gedrillt, gedreht, gezwirbelt oder in der Art von Stahlwolle ausgebildet.

## Beschreibung

Die vorliegende Erfindung betrifft ein Filterelement, das stirnseitig über zwei Endscheiben abgedichtet ist, gemäß dem Oberbegriff des Anspruchs 1. Die Erfindung betrifft außerdem ein Verfahren zur Herstellung eines derartigen Filterelements sowie eine Filtereinrichtung mit einem solchen Filterelement.

Bei Filterelementen und generell Filtereinrichtungen, die in explosionsgefährdeten Bereichen eingesetzt werden, muss gemäß DIN 13463 sichergestellt sein, dass sich zwischen den Bauteilen der Filtereinrichtung keine statische Elektrizität bilden kann, die zu einer Entladung führt. Aus diesem Grund müssen sämtliche elektrisch leitfähigen Bauteile des Filterelements bzw. der Filtereinrichtung einen untereinander durchgängigen elektrischen Kontakt besitzen, um einen Potentialausgleich zu ermöglich.

Die vorliegende Erfindung beschäftigt sich daher mit dem Problem, für ein Filterelement der gattungsgemäßen Art eine verbesserte Ausführungsform anzugeben, die eine bessere Leitfähigkeit einzelner Komponenten untereinander sowie ein besseres Handling ermöglichen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Filterelement mit einem Filtermaterial, das stirnseitig über zwei Endscheiben abgedichtet ist, zwischen dem Filtermaterial, insbesondere einem Faltenstern, und zumindest einer Endscheibe Stahlwollefäden anzuordnen, über welche das Filtermaterial elektrisch leitend mit der zumindest einen Endscheibe verbunden ist. Hierdurch ist eine statische Aufladung des Filtermaterials nicht mehr möglich, da diese über die Stahlwollefäden mit der elektrisch leitenden Endscheibe verbunden sind, wobei die Endscheibe wiederum derart elektrisch angebunden bzw. geerdet ist, dass ein Potentialausgleich ermöglicht wird. Die Stahlwollefäden besitzen dabei einen Durchmesser im µm-Bereich und sind dadurch vergleichsweise weich und besitzen eine geringe Federwirkung. Über die elektrische Verbindung mittels der Stahlwollefäden ist eine Erdung des Filtermaterials möglich.

Bei einer vorteilhaften Weiterbildung der erfindungsgemäßen Lösung sind zwischen dem Filtermaterial und beiden Endscheiben Stahlwollefäden angeordnet, wodurch eine elektrisch leitende Verbindung des Filtermaterials mit beiden Endscheiben gegeben ist. Hierdurch ist nicht nur eine fail-safe-Funktion gegeben, sondern das Filterelement, welches beispielsweise als herkömmliches Ringfilterelement ausgebildet ist, kann auch in umgekehrter Stellung eingebaut werden, sofern in der Filtereinrichtung lediglich eine Erdung an einer Stirnseite des Filterelements vorgesehen ist. Eine derartige Erdung wird beispielsweise über einen elektrischen Kontakt hergestellt, wobei bei einem Filterelement, bei welchem lediglich eine Endscheibe elektrisch leitend mit dem Filtermaterial verbunden ist, darauf geachtet werden müsste, dass das Filterelement richtig eingebaut ist, so dass diejenige Endscheibe mit einem Massekontakt der Filtereinrichtung elektrisch leitend verbunden wird, die auch elektrisch leitend mit dem Filtermaterial verbunden ist. Sind jedoch beide Endscheiben elektrisch leitend mit dem Filtermaterial verbunden, so kann das Filterelement sowohl in der einen als auch in der um 180° gedrehten anderen Stellung eingebaut werden, wodurch insbesondere ein Falscheinbau und damit eine gefährliche Nicht-Erdung des Filterelements vermieden werden können. Dies gilt selbstverständlich nur für diejenigen Filterelemente die keine zusätzlichen Passelemente, wie beispielsweise einen Pin aufweisen, der eine exakte und eindeutige Einbaulage vorgibt.

Zweckmäßig sind die Stirnseite des Filtermaterials und die Stahlwollefäden in einem Kleb-/Dichtstoff eingebettet, der die jeweilige Endscheibe mit der Stirnseite des Filtermaterials verbindet. Aufgrund der spitzen Enden der Stahlwollefäden können diese auch beim Eindrücken des Filtermaterials in den noch flüssigen Kleb-/Dichtstoff diesen Durchstoßen und somit die elektrisch leitende Verbindung zwischen der Endscheibe und dem Filtermaterial herstellen.

Das Filtermaterial selbst ist vorzugsweise ebenfalls aus elektrisch leitfähigem Material ausgebildet und/oder weist eine elektrisch leitfähige Beschichtung auf. Ist das gesamte Filtermaterial aus einem elektrisch leitfähigen Material ausgebildet, so müssen keine weiteren Vorkehrungen beim Zusammenbau des Filterelements berücksichtigt werden. Besitzt jedoch das Filtermaterial lediglich eine elektrisch leitfähige Beschichtung, so ist beim Zusammenbau des Filterelements darauf zu achten, dass die elektrisch leitfähige Beschichtung auf jeden Fall über die Stahlwollefäden elektrisch leitend mit der jeweiligen Endscheibe verbunden wird.

Zweckmäßig beträgt das Gewicht der Stahlwollefäden ca. 2,55 g/m. Bei einem Stahlgewicht von ca. 7,87 g/cm ergibt sich daraus ein Durchmesser eines derartigen Stahlfadens von 64 µm. Bevorzugt weisen derartige Stahlwollefäden einen Durchmesser zwischen 10 und 50 µm auf. Die Stahlwollefäden können dabei gedrillt, gedreht, gezwirbelt oder in der Art von Stahlwolle ausgebildet sein, das heißt auch ungeordnet zwischen dem Filtermaterial und der Endscheibe angeordnet werden.

Die mit einem derartigen Filterelement ausgestattete Filtereinrichtung kann insbesondere als Gasfilter, beispielsweise als Luftfilter ausgebildet sein, wobei mitgeführte Stoffe wie beispielsweise Kraftstoff oder Staub, die zu bannende Explosionsgefahr begründen können.

Die vorliegende Erfindung beruht weiter auf dem allgemeinen Gedanken, ein Verfahren zur Herstellung eines derartigen Filterelements anzugeben, mittels welchem das Filterelement besonders einfach und rationell herzustellen ist. Bei dem erfindungsgemäßen Verfahren werden zunächst in einem ersten Verfahrensschritt a.) die Stahlwollefäden in vordefinierter Form in eine Endscheibe eingelegt. In einem sich daran anschließenden zweiten Verfahrensschritt b.) wird Kleb-/Dichtstoff in die Endscheibe eingebracht, wobei dieser Kleb-/Dichtstoff nicht elektrisch leitfähig ist. Anschließend wird in einem dritten Verfahrensschritt c.) ein Filtermaterial, insbesondere ein Faltenstern mit seiner Stirnseite in den Kleb-/Dichtstoff eingedrückt, wobei die Stahlwollefäden zwischen dem Filtermaterial und der Endscheibe liegen, so dass einer elektrischer Kontakt zwischen dem Filtermaterial und der Endscheibe hergestellt werden kann. Aufgrund der spitzen Enden der einzelnen Stahlwollefäden durchstoßen diese das Kleb-/Dichtstoffmaterial und stellen somit die elektrische Kontaktierung des Filtermaterials mit der zugehörigen Endscheibe sicher. Optional kann sich noch ein vierter Verfahrensschritt d.) anschließen, bei welchem die Verfahrensschritte a.) bis c.) mit der zweiten Endscheibe wiederholt werden, so dass auch diese elektrisch leitfähig mit dem Filtermaterial verbunden ist. Generell kann selbstverständlich aber auch die zweite Endscheibe ohne derartige Stahlwollefäden angeklebt werden. Durch das Eindrücken des Filtermaterials in den noch flüssigen Kleb-/Dichtstoff werden die Stahlwollefäden zumindest leicht zusammengedrückt und gewährleisten dadurch den erforderlichen elektrisch leitenden Kontakt zwischen dem Filtermaterial und der Endscheibe.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Filterelement mit einer angedeuteten Filtereinrichtung,
- Fig. 2: eine Schnittdarstellung durch das Filterelement entlang der Schnittebene A-A.

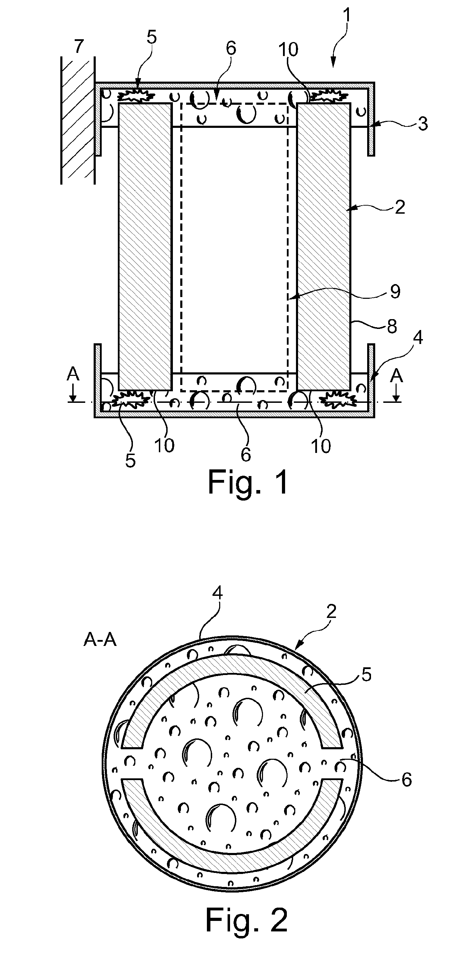

Entsprechend der Fig. 1 weist ein erfindungsgemäßes Filterelement 1 ein Filtermaterial 2 auf, welches beispielsweise als Faltenstern ausgebildet ist und welches stirnseitig über zwei Endscheiben 3, 4 abgedichtet ist. Die Endscheiben 3, 4 sind dabei nicht scheibenförmig, sondern eher in der Art eines Topfes ausgebildet, um einen Kleb-/Dichtstoff 6 aufnehmen zu können. Erfindungsgemäß sind nun zwischen dem Filtermaterial 2, insbesondere einem Faltenstern, und zumindest einer Endscheibe 3, 4 hier zwischen dem Filtermaterial 2 und beiden Endscheiben 3, 4, Stahlwollefäden 5 angeordnet, über welche das Filtermaterial 2 elektrisch leitend mit zumindest einer, hier beiden Endscheiben 3, 4 verbunden ist. Hierdurch kann insbesondere zwischen dem Filtermaterial 2 und der Endscheibe 3, 4 ein Potentialausgleich erfolgen, so dass das Filtermaterial 2 geerdet ist. Die Stirnseiten 10 des Filtermaterials 2 sind ebenso wie die Stahlwollefäden 5 in den Kleb-/Dichtstoff 6 eingebettet, der die jeweilige Endscheibe 3, 4 mit der zugehörigen Stirnseite 10 des Filtermaterials 2 dicht verbindet. Der Kleb-/Dichtstoff 6 selbst ist elektrisch nicht leitfähig.

Das Filtermaterial 2 selbst kann aus elektrisch leitfähigem Material ausgebildet sein, beispielsweise elektrisch leitende Partikel beinhalten und/oder eine elektrisch leitfähige Beschichtung 8 aufweisen, wobei im ersten Fall eine problemlose elektrische Kontaktierung des Filtermaterials 2 über die Stahlwollefäden 5 mit der Endscheibe 3, 4 möglich ist. Bei Vorliegen lediglich einer elektrisch leitfähigen Beschichtung 8 ist darauf zu achten, dass diese elektrisch leitend mit den Stahlwollefäden 5 und über diese mit der jeweiligen Endscheibe 3, 4 verbunden ist.

Das Gewicht der Stahlwollefäden 5 beträgt 2,55 g/m, wobei ein Durchmesser im Bereich weniger µm, beispielsweise 10 bis 50 µm, insbesondere 32 µm, liegt. Die Stahlwollefäden 5 können gedrillt, gedreht, gezwirbelt oder in der Art von Stahlwolle ausgebildet sein. Das Filterelement 1 kann als Ringfilterelement ausgebildet sein. Eingebaut wird das Filterelement 1 in eine lediglich angedeutete Filtereinrichtung 7, wobei darauf zu achten ist, dass die Endscheibe 3, 4 elektrisch leitend mit der Filtereinrichtung 7 verbunden und darüber ein Potentialausgleich möglich ist. Die Filtereinrichtung 7 kann generell als Gasfilter, insbesondere als Staub oder als Tankentlüftungsfilter, ausgebildet sein.

Das Filterelement 1 lässt sich wie folgt vergleichsweise einfach herstellen. In einem ersten Verfahrensschritt a.) werden die Stahlwollefäden 5 in vordefinierter Form in eine Endscheibe 3, 4 eingelegt, beispielsweise halbkreisförmig, wie dies in der Schnittdarstellung gemäß der Fig. 2 gezeigt ist. In einem zweiten Verfahrensschritt b.) wird nun der Kleb-/Dichtstoff 6 in die Endscheibe 3, 4 eingebracht. In einem dritten Verfahrensschritt c.) wird nun das Filtermaterial 2, beispielsweise ein Faltenstern, mit seiner axialen Stirnseite 10 in den Kleb-/Dichtstoff 6 eingedrückt, wobei die Stahlwollefäden 5 zwischen dem Filtermaterial 2 und der Endscheibe 3, 4 liegen, so dass ein elektrischer Kontakt zwischen dem Filtermaterial 2 und der Endscheibe 3, 4 hergestellt werden kann. Die Stahlwollefäden 5 besitzen dabei eine leicht federnde Wirkung und Durchstoßen mit ihren spitzen Enden den Kleb-/Dichtstoff 6, so dass stets eine ausreichende elektrische Kontaktierung zwischen der Endscheibe 3, 4 und dem Filtermaterial 2 gegeben ist. Ist die erste Endscheibe 3 oder 4 mit dem Filtermaterial 2 verbunden, so kann auch die andere Endscheibe 4, 3 in gleicher Weise elektrisch leitend mit dem Filtermaterial 2 verbunden oder aber ohne das Einlegen der Stahlwollefäden 5 angeklebt werden. Sind beide Endscheiben 3, 4 elektrisch leitend mit dem Filtermaterial 2 verbunden, so ergibt sich hieraus eine fail-safe-Funktion, die insbesondere ein beliebiges Einbauen des Filterelements 1 in die Filtereinrichtung 7 ermöglicht.

Zusammen mit dem Filtermaterial 2 kann selbstverständlich auch eine Innenzarge 9 in den Kleb-/Dichtstoff 6 eingedrückt werden. Diese Innenzarge 9 ist üblicherweise ebenfalls elektrisch leitfähig und dient vorzugsweise der Aussteifung des Filtermaterials 2, das heißt des Faltensterns.

Mit dem erfindungsgemäßen Filterelement 1 lassen sich insbesondere auch die hohen Anforderungen gemäß der DIN EN 13463 erfüllen, die im Wesentlichen fordert, dass zwischen einzelnen Bauteilen bei Filterelementen in explosionsgefährdeten Bereichen keine statische Elektrizität gebildet werden kann, welche zu unkontrollierten Entladungen führen würde. Insgesamt kann mit dem erfindungsgemäßen Filterelement 1 eine bessere Leitfähigkeit sowie ein besseres Handling und eine einfache Herstellungsweise erreicht werden.

## Patentansprüche

1. Filterelement (1) mit einem Filtermaterial (2), welches stirnseitig über zwei Endscheiben (3,4) abgedichtet ist,
**dadurch gekennzeichnet,**
- **dass** zwischen dem Filtermaterial (2), insbesondere einem Faltenstern, und zumindest einer Endscheibe (3,4) Stahlwollefäden (5) angeordnet sind, über welche das Filtermaterial (2) elektrisch leitend mit der zumindest einen Endscheibe (3,4) verbunden ist,
- **dass** die Stahlwollefäden (5) gedrillt, gedreht, gezwirbelt oder in der Art von Stahlwolle ausgebildet sind.

2. Filterelement nach Anspruch 1,
**dadurch gekennzeichnet,**
**dass** zwischen dem Filtermaterial (2) und beiden Endscheiben (3,4) Stahlwollefäden (5) angeordnet sind.

3. Filterelement nach Anspruch 1 oder 2,
**dadurch gekennzeichnet,**
**dass** eine axiale Stirnseite (10) des Filtermaterials (2) und die Stahlwollefäden (5) in einen Kleb-/Dichtstoff (6) eingebettet sind, der die jeweilige Endscheibe (3,4) mit der Stirnseite (10) des Filtermaterials (2) dicht verbindet.

4. Filterelement nach einem der Ansprüche 1 bis 3,
**dadurch gekennzeichnet,**
**dass** das Filtermaterial (2) aus elektrisch leitfähigem Material ausgebildet ist und/oder eine elektrisch leitfähige Beschichtung (8) aufweist.

5. Filterelement nach einem der Ansprüche 1 bis 4,
**dadurch gekennzeichnet,**
**dass** das Gewicht der Stahlwollefäden (5) 2,55 g/m beträgt.

6. Filterelement nach einem der Ansprüche 1 bis 5,
**dadurch gekennzeichnet,**
**dass** das Filterelement (1) als Ringfilterelement ausgebildet ist.

7. Filterelement nach einem der Ansprüche 1 bis 6,
**dadurch gekennzeichnet,**
**dass** das Filterelement (1) als Gasfilter ausgebildet ist.

8. Filtereinrichtung (7) mit einem Filterelement (1) nach einem der Ansprüche 1 bis 7, wobei zumindest eine Endscheibe (3,4) des Filterelements (1) geerdet ist, zumindest aber einen Potentialausgleich ermöglicht.

9. Verfahren zur Herstellung eines Filterelements (1) nach einem der Ansprüche 1 bis 7, bei dem
a.) die Stahlwollefäden (5) in vordefinierter Form in eine Endscheibe (3) eingelegt werden,
b.) Kleb-/Dichtstoff (6) wird in die Endscheibe (3) eingebracht,
c.) ein Filtermaterial (2), insbesondere ein Faltenstern, wird mit seiner Stirnseite (10) in den Kleb-/Dichtstoff (6) eingedrückt, wobei die Stahlwollefäden (5) zwischen dem Filtermaterial (2) und der Endscheibe (3) liegen, so dass ein elektrischer Kontakt zwischen dem Filtermaterial (2) und der Endscheibe (3) hergestellt werden kann,
d.) die Verfahrensschritte a.) bis c.) optional bei der zweiten Endscheibe (4) wiederholt werden.

10. Verfahren nach Anspruch 9,
**dadurch gekennzeichnet,**
**dass** zusammen mit dem Filtermaterial (2) eine Innenzarge (9) in den Kleb-/Dichtstoff (6) eingedrückt wird.
